# EUROPÄISCHE PATENTSCHRIFT

(11) **EP 1 687 932 B1**
(45) Veröffentlichungstag und Bekanntmachung des Hinweises auf die Patenterteilung: **21.09.2011**
(21) Anmeldenummer: 04818786.8
(22) Anmeldetag: 16.11.2004
(51) Int. Cl.: H04L 9/32

(54) **Autorisierung einer Transaktion**
Authorisation of a transaction
Autorisation d'une transaction

(30) Priorität: 18.11.2003 DE 10353853
(43) Veröffentlichungstag der Anmeldung: 09.08.2006
(73) Patentinhaber: Giesecke & Devrient GmbH, 81677 München (DE)
(72) Erfinder: WEISS, Dieter, 81825 München (DE); RANKL, Wolfgang, 81825 München (DE)
(86) Internationale Anmeldenummer: PCT/EP2004/012995
(87) Internationale Veröffentlichungsnummer: WO 2005/050911

(56) Entgegenhaltungen:
- US-A1- 2001 034 837
- MENEZES,VANSTONE,OORSCHOT: "Handbook of Applied Cryptography" 1997, CRC PRESS LLC , USA , XP002315753 Seite 4 Seite 24 - Seite 25 Seite 359 - Seite 362 Seite 364 Seite 387 Seite 389 Seite 391 Seite 405 - Seite 406
- BRUCE SCHNEIER: "Applied Cryptography Second Edition" 1996, JOHN WILEY & SONS , USA , XP002315861 Seite 2 Seite 52 Seite 56 Seite 109 Seite 174 Seite 455 - Seite 456

## Beschreibung

Die Erfindung betrifft allgemein das Gebiet der elektronischen Ausführung von Transaktionen und spezieller das Gebiet der Autorisierung einer Transaktion durch einen Benutzer. In der Wortwahl des vorliegenden Dokuments soll unter einer "Transaktion" insbesondere ein rechtlicher oder tatsächlicher Vorgang verstanden werden, dessen Autorisierung durch einen berechtigten Benutzer sich zweifelsfrei nachweisen lassen muß. Eine derartige Transaktion kann beispielsweise eine elektronische Zahlung oder ein sonstiges Finanzgeschäft oder die elektronische Abgabe einer Willenserklärung sein.

Zur elektronischen Autorisierung einer Transaktion wird im allgemeinen ein persönliches Merkmal des autorisierenden Benutzers verwendet, das nur dem Benutzer bekannt ist und/ oder nur mit Mitwirkung des Benutzers ermittelt werden kann. Während bislang als persönliche Merkmale überwiegend Geheimzahlen (PINs - *personal identification numbers*) eingesetzt wurden, gewinnt die Verwendung biometrischer Merkmale zunehmende Bedeutung. Ein solches biometrisches persönliches Merkmal kann z.B. durch die Abtastung eines Fingerabdrucks oder durch die Aufnahme des Gesichts oder eines Auges des Benutzers oder durch die Aufzeichnung einer Schriftprobe des Benutzers ermittelt werden.

Zur Autorisierung einer Transaktion wird der Benutzer in der Regel aufgefordert, das persönliche Merkmal an einem Terminal einzugeben bzw. das Merkmal dem Terminal zugänglich zu machen. Hierbei besteht aber das Problem, daß der Benutzer im allgemeinen keine zuverlässige Möglichkeit hat, sich von der Integrität des Terminals zu überzeugen. Wenn der Benutzer das persönliche Merkmal einem in betrügerischer Absicht aufgestellten Terminal zugänglich machen würde, so könnte das persönliche Merkmal - z.B. der Fingerabdruck - von dem gefälschten Terminal aufgezeichnet und später mißbräuchlich eingesetzt werden.

Das Buch "Handbook of Applied Cryptography" (1997; Menezes, Vanstone, Oorschot) zeigt allgemeine Technik für Authentisierung von Benutzern, Systemen und Transaktionen.

Die deutsche Offenlegungsschrift DE 41 42 964 A1 zeigt ein System, bei dem ein Geheimnis des Benutzers - z.B. ein nur dem Benutzer bekanntes Kennwort - verschlüsselt in einer Chipkarte gespeichert ist. Bevor der Benutzer zur Eingabe einer PIN als persönliches Merkmal aufgefordert wird, liest ein Terminal das verschlüsselte Kennwort aus, entschlüsselt es und zeigt es im Klartext dem Benutzer an. Aus der Anzeige des korrekten Kennworts ersieht der Benutzer, daß es sich um ein vertrauenswürdiges Terminal handelt, weil ein gefälschtes Terminal das verschlüsselte Kennwort nicht entschlüsseln könnte.

Das gerade genannte System setzt jedoch voraus, daß der Benutzer eine Chipkarte oder einen sonstigen Datenträger, auf dem das verschlüsselte Kennwort gespeichert ist, mit sich führt. Es wäre für den Benutzer bequemer, wenn dies nicht zwingend erforderlich wäre. Insbesondere im Zusammenhang mit biometrischen Autorisierungsverfahren wird häufig gefordert, daß keine zusätzlichen Datenträger benötigt werden sollen. Beispielsweise bei der biometrischen Autorisierung eines Bezahlvorgangs ist dies ein wesentlicher Gesichtspunkt, um den Vorgang so einfach wie möglich zu gestalten.

Die Erfindung hat daher die Aufgabe, die oben genannten Probleme zurnindest zum Teil zu vermeiden und eine Technik zur Autorisierung einer Transaktion durch einen Benutzer unter Verwendung eines Terminals bereitzustellen, die dem Benutzer die Möglichkeit gibt, ein gefälschtes Terminal zu erkennen. In bevorzugten Ausgestaltungen soll die Erfindung besonders an die Verwendung biometrischer Autorisierungstechniken angepaßt sein.

Erfindungsgemäß wird diese Aufgabe ganz oder zum Teil gelöst durch ein von einem Terminal ausgeführtes Verfahren gemäß Anspruch 1, ein von einem Hintergrundsystem ausgeführtes Verfahren gemäß Anspruch 8, ein Verfahren gemäß Anspruch 13, eine Vorrichtung gemäß Anspruch 16 und ein Computerprogrammprodukt gemäß Anspruch 17. Die abhängigen Ansprüche definieren bevorzugte Ausgestaltungen der Erfindung.

Die Erfindung geht von der Grundidee aus, Daten über ein nur dem Benutzer bekanntes Geheimnis in einem Hintergrundsystem (*host system*), mit dem das Terminal Daten auszutauschen vermag, zu speichern. Das Hintergrundsystem übermittelt die Geheimnisdaten des Benutzers erst dann an das Terminal, wenn sich das Terminal erfolgreich bei dem Hintergrundsystem authentisiert - also als berechtigtes Terminal ausgewiesen - hat. Da in dem Hintergrundsystem in der Regel Geheimnisdaten vieler Benutzer gespeichert sind, ist ferner eine Identifikation des Benutzers erforderlich, bevor das Hintergrundsystem auf die dem Benutzer zugeordneten Geheimnisdaten zugreifen kann.

Das Geheimnis, das das Hintergrundsystem in Form von Geheimnisdaten nach einer erfolgreichen Authentisierung des Terminals an das Terminal sendet, wird dem Benutzer wiedergegeben. Der Benutzer kann daraufhin sicher sein, daß das Terminal vertrauenswürdig ist. Um die Transaktion zu autorisieren, kann der Benutzer nun sein persönliches Merkmal eingeben oder dieses dem Terminal zugänglich machen, ohne daß der Benutzer Mißbrauch befürchten müßte. Die Transaktion wird nun durchgeführt, wobei das persönliche Merkmal des Benutzers zum Nachweis der Autorisierung dient.

Die Erfindung bietet den erheblichen Vorteil einer für den Benutzer nachprüfbaren Authentisierung des Terminals, ohne daß dafür ein Datenträger des Benutzers benötigt werden würde. Insbesondere die Akzeptanz biometrischer Autorisierungsverfahren kann dadurch erheblich gesteigert werden, da viele Benutzer Bedenken hinsichtlich eines möglichen Mißbrauchs ihrer Biometriedaten haben.

Die Aufzählungsreihenfolge der Schritte in den Verfahrensansprüchen soll nicht als Einschränkung des Schutzbereichs verstanden werden. Es sind vielmehr Ausgestaltungen der Erfindung vorgesehen, bei denen diese Verfahrensschritte in anderer Reihenfolge oder ganz oder teilweise parallel oder ganz oder teilweise ineinander verzahnt (*interleaved*) ausgeführt werden. Dies betrifft insbesondere eine mögliche Verzahnung der miteinander in Beziehung stehenden Schritte des Terminals und des Hintergrundsystems, in denen Daten ermittelt, übertragen und verarbeitet werden. Ferner können insbesondere die Authentisierung des Terminals bei dem Hintergrundsystem und die Übertragung der Benutzerbezeichnungsdaten an das Hintergrundsystem in einem einzigen Schritt oder in mehreren Teilschritten - in beliebiger Reihenfolge - ausgeführt werden.

Zur Authentisierung des Terminals bei dem Hintergrundsystem kann jedes Verfahren verwendet werden, das die Verwendung gefälschter Terminals ausschließt oder zumindest erheblich erschwert. In der Regel beruhen solche Authentisierungsverfahren auf einem geheimen Schlüssel des Terminals, wobei eine symmetrische oder asymmetrische Verschlüsselung erfolgen kann. Vorzugsweise übermittelt das Terminal zur Authentisierung an das Hintergrundsystem Informationen, aus denen das Hintergrundsystem ableiten kann, daß das Terminal den geheimen Schlüssel besitzt. Der geheime Schlüssel selbst soll jedoch für einen Unbefugten auch dann nicht ermittelbar sein, wenn der Unbefugte eine Vielzahl von Kommunikationsvorgängen zwischen dem Terminal und dem Hintergrundsystem abhört und auswertet.

In bevorzugten Ausgestaltungen wird zur Authentisierung des Terminals eine mit einem MAC (*Message Authentication Code -* Nachrichtenauthentisierungscode) oder einer kryptogaphischen Signatur gesicherte Nachricht verwendet. Vorzugsweise enthält diese Nachricht Benutzerbezeichnungsdaten, die vom Benutzer in das Terminal eingegeben wurden oder die von dem Terminal aus Identifikationsinformationen, die den Benutzer betreffen, abgeleitet wurden.

Das an den Benutzer wiedergegebene Geheimnis kann jede Art von Information sein, die sich für den Benutzer leicht identifizieren läßt und die durch ein gefälschtes Terminal nicht oder nur schwer erraten werden kann. Je nach den Ausgabemöglichkeiten des Terminals kann die Informationen z.B. ein angezeigter Text und/oder ein angezeigtes Bild und/oder eine akustische Wiedergabe und/oder eine taktile Information sein.

Um Manipulationsmöglichkeiten durch Ausspähen von erfolgreichen Transaktionen eines Benutzers zu vermeiden, wird in bevorzugten Ausführungsformen ein von Transaktionen zu Transaktion wechselndes Geheimnis verwendet, das z.B. aus mehreren vorgegebenen Geheimnissen ausgewählt werden kann. In manchen Ausgestaltungen können auch Informationen über frühere Transaktionen - z.B. ein Bild des Benutzers bei der letzten vorgenommenen Transaktion - in das Geheimnis aufgenommen werden oder das Geheimnis bilden.

In bevorzugten Ausführungsformen ist das persönliche Merkmal des Benutzers ein biometrisches Merkmal. Je nach der Ausgestaltung des Terminals kann z.B. ein Fingerabdruck des Benutzers ermittelt werden und/oder eine Unterschriftsprobe des Benutzers aufgezeichnet werden und/oder eine Aufnahme des Benutzers oder einzelner Körperteile des Benutzers angefertigt werden und/ oder eine Sprechprobe des Benutzers analysiert werden. Es sollen jedoch auch Ausgestaltungen der Erfindung nicht ausgeschlossen sein, bei denen das persönliche Merkmal ein Kennwort oder eine Geheimzahl ist, oder bei denen das persönliche Merkmal auf einem Datenträger gespeichert ist. Solche Ausgestaltungen werden jedoch weniger bevorzugt, weil sie für den Benutzer nicht so komfortabel sind.

Das persönliche Merkmal wird vorzugsweise von dem Terminal an das Hintergrundsystem übertragen und dort überprüft. Bei einer erfolgreichen Überprüfung des persönlichen Merkmals gilt die Transaktion als autorisiert, und das Terminal kann z.B. eine entsprechende Quittung ausgeben. Auch Ausgestaltungen, bei denen das persönliche Merkmal ganz oder teilweise durch das Terminal überprüft wird, sollen nicht ausgeschlossen sein. Hierzu ist jedoch in der Regel eine Übermittlung von Informationen, die zur Überprüfung benötigt werden, von dem Hintergrundsystem an das Terminal erforderlich, was aus Sicherheitsgründen nur in Ausnahmefällen erwünscht sein dürfte.

In bevorzugten Ausgestaltungen werden die Kommunikationsvorgänge zwischen dem Terminal und dem Hintergrundsystem durch geeignete Maßnahmen gegen Ausspähung und/oder Angriffe durch zwischengeschaltete Geräte - insbesondere gegen sogenannte Replay-Angriffe - geschützt. Beispielsweise können Zeitstempel und/oder Sequenznummern eingesetzt werden. In vorteilhaften Ausführungsformen ist ferner eine Verschlüsselung aller Nachrichten - vorzugsweise mit einem für jede Sitzung *(session)* neu ausgehandelten Sitzungsschlüssel - vorgesehen.

Das erfindungsgemäße Computerprogrammprodukt weist Programmbefehle auf, um das erfindungsgemäße Verfahren in einem Terminal und/oder einem Hintergrundsystem zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch auch ein nicht-körperliches Medium sein, z.B. ein über ein Computernetzwerk übermitteltes Signal.

Die erfindungsgemäße Vorrichtung kann insbesondere ein Terminal oder ein Hintergrundsystem oder eine Kombination von Terminal und Hintergrundsystem sein. In bevorzugten Weiterbildungen weisen die Vorrichtung und das Computerprogrammprodukt Merkmale auf, die den in der vorliegenden Beschreibung erwähnten und/ oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen:
Fig.1 ein System nach einem Ausführungsbeispiel der Erfindung in einer schematischen Blockdarstellung zeigt, und
Fig. 2A und Fig. 2B je einen Abschnitt einer beispielhaften Ablaufdarstellung einer erfolgreich autorisierten Transaktion bei dem System von Fig.1 zeigen.

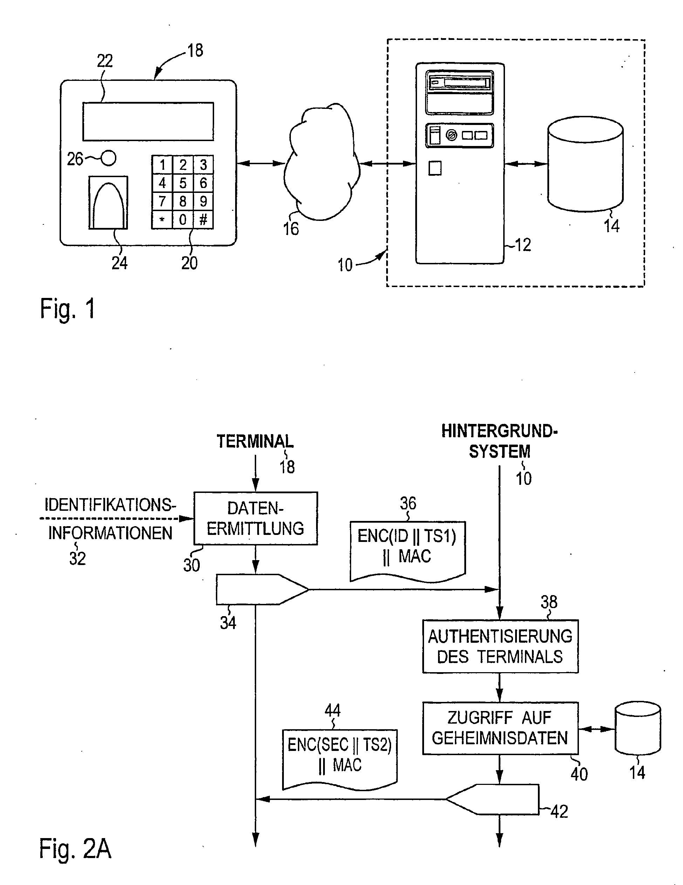

In Fig.1 ist ein Hintergrundsystem 10 mit einem Server 12 und einer Datenbank 14 dargestellt. Der Server 12 ist als leistungsfähiger Computer ausgestaltet, der von einem Programm gemäß dem im folgenden dargestellten Verfahren gesteuert wird. Das Hintergrundsystem 10 bedient über ein Netzwerk 16 eine Vielzahl von Terminals, von denen in Fig.1 beispielhaft ein Terminal 18 gezeigt ist. Das Netzwerk 16 kann mehrere Teilabschnitte aufweisen, die beispielsweise als lokales Netz und/oder als Datenpaketnetz - wie z.B. das Internet - und/oder als analoges oder digitales Telefonnetz ausgestaltet sein können.

Das Terminal 18 ist im vorliegenden Ausführungsbeispiel als kompaktes, eigenständiges Gerät ausgestaltet, das Bedienelemente wie z.B. eine Tastatur 20, Anzeigeelemente wie z.B. eine graphische Anzeige 22 und Elemente zur Aufnahme biometrischer Merkmale aufweist. Im vorliegenden Ausführungsbeispiel sind für den letztgenannten Zweck ein Fingerabdrucksensor 24 und eine Kamera 26 vorgesehen. In Ausführungsalternativen können mehr oder weniger oder andere biometrische Sensoren vorgesehen sein; ferner sind Ausgestaltungen des Terminals 18 denkbar, die keine biometrischen Sensoren aufweisen, sondern die Eingabe eines persönlichen Merkmals über die Tastatur 20 erfordern.

Das Terminal 18 ist in dem in Fig.1 gezeigten Ausführungsbeispiel als eigenständiges Gerät ausgestaltet, das von einem eingebauten Mikroprozessor entsprechend dem im folgenden beschriebenen Verfahren gesteuert wird. Während in einfachen Ausführungsformen Transaktionsdaten - z.B. ein zu entrichtender Kaufpreis - über die Tastatur 20 eingegeben werden, ist vorzugsweise vorgesehen, solche Daten über eine elektronische Schnittstelle (in Fig.1 nicht gezeigt) an das Terminal 18 zu übertragen. An die Schnittstelle kann z.B. eine Registrierkasse angeschlossen sein. In weiteren Ausführungsalternativen ist das Terminal 18 kein eigenständiges Gerät, sondern es ist z.B. in eine Kasse oder einen Automaten oder eine Zugangskontrolleinrichtung eingebaut.

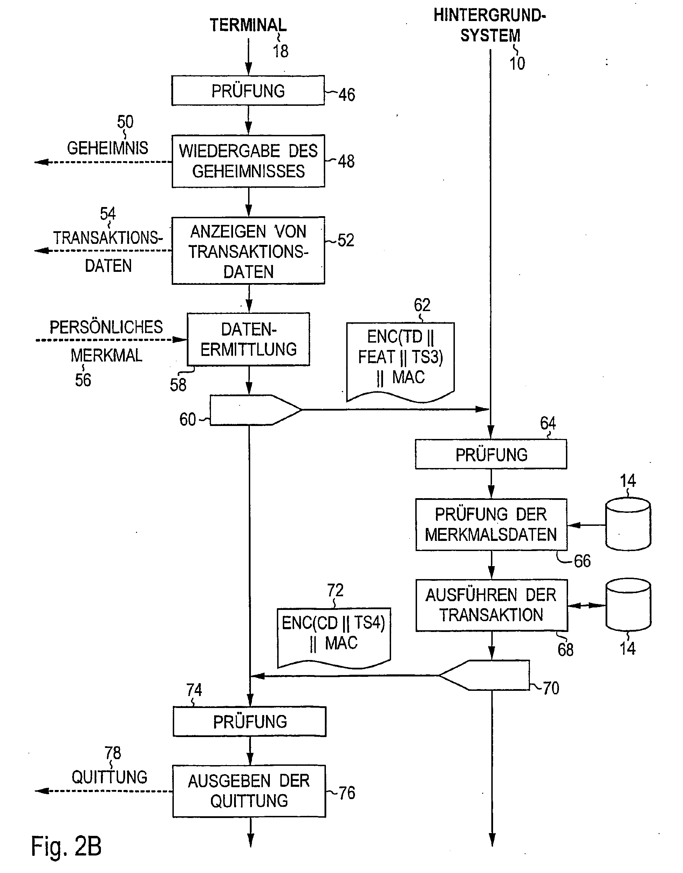

Der in Fig. 2A und Fig. 2B gezeigte Ablauf einer erfolgreich autorisierten Transaktion beginnt in Schritt 30 mit einer Identifikation des Benutzers, wobei Identifikationsinformationen 32 ermittelt werden. Da zu diesem Zeitpunkt der Benutzer noch nicht von der Vertrauenswürdigkeit des Terminals 18 ausgehen kann, werden in der Regel nicht-vertrauliche Identifikationsinformationen 32 verwendet. Beispielsweise kann der Benutzer in Schritt 30 als Identifikationsinformationen 32 eine Kundennummer oder eine Telefonnummer oder seinen Namen - gegebenenfalls mit Geburtsdatum, falls dies zur eindeutigen Identifizierung erforderlich ist - an der Tastatur 20 des Terminals 18 eingeben.

Insbesondere bei umfangreicheren Identifikationsinformationen 32 kann in manchen Ausgestaltungen die Verwendung von Speicherkarten oder Speichermodulen vorgesehen sein. Beispielsweise können die Identifikationsinformationen 32 als Klartext oder Barcode auf einer Karte aufgedruckt sein und von einer Leseeinrichtung des Terminals 18 - z.B. der Kamera 26 - ausgewertet werden. Auf ähnliche Weise kann eine Magnetkarte oder ein kompaktes Funkmodul (*RF tag*) zum bequemen Speichern der Identifikationsinformationen 32 verwendet werden, wobei natürlich auch hier das Terminal 18 mit einer entsprechenden Leseeinrichtung ausgestattet sein muß. Die genannten Wege schließen sich nicht gegenseitig aus; so kann beispielsweise der Benutzer, wenn der Datenträger gerade nicht greifbar ist, als zeitaufwendigere Alternative seinen Namen und sein Geburtsdatum über die Tastatur 20 eingeben.

In einer weiteren Ausführungsalternative werden biometrische Informationen als Identifikationsinformationen 32 eingesetzt. Beispielsweise kann zur Identifikation des Benutzers ein durch die Kamera 26 aufgenommenes Bild des Gesichts des Benutzers dienen. Ferner kann z.B. ein vom Fingerabdrucksensor 24 aufgenommener Fingerabdruck des Benutzers verwendet werden. Falls auch die Autorisierung der Transaktion über einen Fingerabdruck erfolgt, sollte der Benutzer zur Identifikation einen anderen Finger verwenden.

Das Terminal 18 berechnet in Schritt 34 Daten 36, die an das Hintergrundsystem 10 übermittelt werden. Diese Daten 34 enthalten in verschlüsselter Form Benutzerbezeichnungsdaten ID und einen ersten Zeitstempel TS1. Die Verschlüsselung ist in Fig.1 durch die Bezeichnung "ENC(...)" angegeben; das Symbol"∥" steht für die Zusammenfügung von je zwei Komponenten einer Nachricht.

Die Benutzerbezeichnungsdaten ID sind in manchen Ausgestaltungen identisch mit den vom Terminal 18 in Schritt 30 ermittelten Identifikationsinformationen 32; dies kann insbesondere dann der Fall sein, wenn die Identifikationsinformationen 32 in kompakter Form vorliegen. Wenn dagegen - z.B. bei einer biometrischen Erfassung - durch das Terminal 18 sehr umfangreiche Identifikationsinformationen 32 ermittelt werden, kann eine Vorverarbeitung im Terminal 18 sinnvoll sein, um aus den Identifikationsinformationen 32 geeignete Merkmalswerte als Benutzerbezeichnungsdaten ID abzuleiten.

Die in Schritt 34 an das Hintergrundsystem 10 übertragenen Daten sind ferner durch einen Datensicherungscode geschützt, der im folgenden als MAC (*Message Authentication Code -* Nachrichtenauthentisierungscode) bezeichnet wird. Konzeptuell ist ein MAC ein *Hash-Wert* oder "Fingerabdruck", in den einerseits die zu übertragende Nachricht - hier die verschlüsselten Benutzerbezeichnungsdaten ID und der erste Zeitstempel TS1- und andererseits ein geheimer Schlüssel des Terminals 18 eingehen. Verfahren zur Berechnung eines MAC sind an sich bekannt und beispielsweise in Kapitel 9.5 des Buches *"*Handbook of Applied Cryptography" von A. Menezes et al., CRC Press,1996, Seiten 352 - 359, beschrieben.

Das Hintergrundsystem 10 führt in Schritt 38 eine Authentisierung des Terminals 18 durch. Im vorliegenden Ausführungsbeispiel kennt das Hintergrundsystem 10 den geheimen Schlüssel des Terminals 18 und kann daher den durch das Terminal 18 berechneten MAC überprüfen. In Ausführungsalternativen kann statt eines MAC, der auf einem symmetrischen Verschlüsselungsverfahren beruht, eine auf einem asymmetrischen Verfahren basierende kryptogaphische Signatur verwendet werden. Zur Auswertung einer solchen kryptogaphischen Signatur braucht dem Hintergrundsystem 10 lediglich ein öffentlicher Schlüssel des Terminals 18 bekannt zu sein. Ferner sind Ausgestaltungen denkbar, bei denen zwischen dem Terminal 18 und dem Hintergrundsystem 10 ein Sitzungsschlüssel ausgehandelt und ein gesicherter, verschlüsselter Kommunikationskanal aufgebaut wird.

Bei einem Fehlschlag der Authentisierung des Terminals 18 in Schritt 38 wird das Verfahren abgebrochen. Andernfalls führt das Hintergrundsystem 10 in Schritt 40 eine Suchanfrage in der Datenbank 14 aus, um auf Geheimnisdaten SEC zuzugreifen, die dem Benutzer zugeordnet sind. Hierbei kann nach einem Eintrag in der Datenbank 14 gesucht werden, der die Benutzerbezeichnungsdaten ID identisch enthält, oder es kann lediglich ein Ähnlichkeitsvergleich vorgenommen werden. Letzteres ist insbesondere dann vorgesehen, wenn die Benutzerbezeichnungsdaten ID aus biometrischen Identifikationsinformationen 32 abgeleitet sind.

Jeder einem Benutzer zugeordnete Eintrag in der Datenbank 14 enthält Geheimnisdaten SEC zu mindestens einem Geheimnis des Benutzers. Im vorliegenden Ausführungsbeispiel wird ein einziges, statisches Geheimnis verwendet; Ausführungsalternativen mit mehreren und/oder dynamischen Geheimnissen werden unten beschrieben.

Die aus der Datenbank 14 ermittelten Geheimnisdaten SEC werden in Schritt 42 mit einem zweiten Zeitstempel TS2 versehen, verschlüsselt und mit einem weiteren MAC gesichert. Die so erhaltenen Daten 44 werden an das Terminal 18 übertragen.

In Schritt 46 (Fig. 2B) führt das Terminal 18 zunächst eine Authentisierung des Hintergrundsystems 10 anhand des in den Daten 44 enthaltenen MAC aus. Diese Authentisierung ist weniger kritisch als die Authentisierung in Schritt 38, weil ein gefälschtes Hintergrundsystem 10 keine Kenntnis über das vom Benutzer erwartete Geheimnis hätte. Ferner wertet das Terminal 18 in Schritt 46 den zweiten Zeitstempel TS2 aus und überprüft, ob die darin angegebene Zeit später als die Zeit des ersten Zeitstempels TS1 ist. In manchen Ausgestaltungen kann ferner eine Überprüfung vorgesehen sein, ob zwischen den beiden Zeitstempeln TS1 und TS2 ein maximal zulässiger Zeitunterschied nicht überschritten wurde.

Die Überprüfung der Zeitstempel dient zum Schutz gegen einen Angriff, bei dem ein früherer Kommunikationsvorgang aufgezeichnet und wiedergegeben wird (sogenannter Replay-Angriff). In Ausführungsalternativen können statt oder zusätzlich zu den Zeitstempeln auch Zufallszahlen zur Zuordnung von Anfragen und zugehörigen Antworten und/oder ein Sendesequenzzähler (*send sequence counter*) verwendet werden.

In Schritt 48 werden die in den Daten 44 verschlüsselt enthaltenen Geheimnisdaten SEC entschlüsselt und als Geheimnis 50 dem Benutzer wiedergegeben. Das Geheimnis 50 kann jede Art von Informationen sein, die geeignet ist, dem Benutzer als Beleg für die erfolgreiche Authentisierung des Terminals 18 beim Hintergrundsystem 10 in Schritt 38 zu dienen. Beispielsweise kann dem Benutzer als Geheimnis 50 ein vom Benutzer gewähltes Bild oder ein vom Benutzer gewähltes Kennwort auf der Anzeige 22 des Terminals 18 gezeigt werden. Zusätzlich oder statt der visuellen Wiedergabe des Geheimnisses 50 ist auch eine akustische und/oder taktile Wiedergabe möglich.

Vor oder nach oder gleichzeitig mit der Wiedergabe des Geheimnisses 50 in Schritt 48 werden dem Benutzer in Schritt 52 die oben schon erwähnten Transaktionsdaten 54 angezeigt, die z.B. den zu zahlenden Kaufpreis angeben können. Die Anzeige des korrekten Geheimnisses 50 signalisiert für den Benutzer, daß das Terminal 18 vertrauenswürdig ist, weil das Hintergrundsystem 10 das Geheimnis 50 nur nach erfolgreicher Authentisierung des Terminals 18 an dieses übermittelt. Der Benutzer braucht daher keine Bedenken zu haben, dem Terminal 18 ein vorab festgelegtes persönliches Merkmal 56 zugänglich zu machen.

Das persönliche Merkmal 56 kann beispielsweise ein Fingerabdruck sein, der vom Terminal 18 in Schritt 58 eingelesen wird, wenn der Benutzer seinen Finger auf den Fingerabdrucksensor 24 legt. In Ausführungsalternativen werden andere biometrische Merkmale - z.B. ein durch den Benutzer gesprochenes Kennwort oder die durch die Kamera 26 aufgenommene Iris des Benutzers - als persönliches Merkmal 56 verwendet. Ferner kann ein biometrisches Merkmal mit einer Kennwort- oder Kennzahleingabe über die Tastatur 20 kombiniert werden, oder es kann in manchen Ausgestaltungen nur eine Tastatureingabe oder eine Tastatureingabe als optionale Alternative zur biometrischen Prüfung vorgesehen sein.

Der Vorgang, bei dem der Benutzer das persönliche Merkmal 56 in das Terminal 18 eingibt oder dieses Merkmal dem Terminal 18 zugänglich macht, stellt eine Willenserklärung dar, mit der der Benutzer die Transaktion autorisiert. Der Benutzer erklärt sich dadurch z.B. mit der Zahlung des in Schritt 52 angezeigten Kaufpreises einverstanden.

Das Terminal 18 wandelt das in Schritt 58 ermittelte persönliche Merkmal 56 nun in Merkmalsdaten FEAT um, die eine kompakte Repräsentation des persönlichen Merkmals 56 darstellen. Eine solche Umwandlung ist insbesondere zur Volumenreduktion biometrischer Daten wünschenswert. In manchen Ausführungsalternativen können die Merkmalsdaten FEAT und das persönliche Merkmal 56 jedoch auch identisch sein.

Die Merkmalsdaten FEAT werden nun zusammen mit den Transaktionsdaten 54 (in Fig. 2B mit "TD" bezeichnet) und einem dritten Zeitstempel TS3 verschlüsselt und mit einem weiteren MAC als Daten 62 an das Hintergrundsystem 10 übertragen. Das Hintergrundsystem 10 überprüft in Schritt 64 den MAC und entschlüsselt die Daten 62. Ferner führt das Hintergrundsystem 10 in Schritt 64 eine Zeitstempelüberprüfung durch, um sicherzustellen, daß der dritte Zeitstempel TS3 eine spätere Zeit als der zweite Zeitstempel TS2 angibt. War die Überprüfung in Schritt 64 erfolgreich, führt das Hintergrundsystem 10 in Schritt 66 eine Überprüfung der Merkmalsdaten FEAT durch. Hierbei greift das Hintergrundsystem 10 auf Daten zu, die in der Datenbank 14 in dem dem Benutzer zugeordneten Eintrag enthalten sind.

Da im hier beschriebenen Ausführungsbeispiel das persönliche Merkmal 56 ein biometrisches Merkmal ist, muß in Schritt 66 ein entsprechendes biometrisches Prüfungsverfahren durchgeführt werden, das insbesondere eine hohe Sicherheit gegen falsch positive Ergebnisse aufweist. Derartige Verfahren sind in vielerlei Ausgestaltungen bekannt und als solche nicht Gegenstand der vorliegenden Erfindung.

Bei einer erfolgreichen Überprüfung des persönlichen Merkmals 56 bzw. der Merkmalsdaten FEAT in Schritt 66 wird in Schritt 68 die Transaktion ausgeführt. Je nach der Art der Transaktion kann beispielsweise das Hintergrundsystem 10 Daten über die gewünschte Zahlung an ein angeschlossenes Geldinstitut weiterleiten oder solche Daten in dem dem Benutzer zugeordneten Datensatz in der Datenbank 14 ablegen. Wenn die Überprüfung der Merkmalsdaten FEAT in Schritt 66 fehlschlägt, wird die Transaktion nicht ausgeführt, und das Verfahren wird abgebrochen. Das gleiche gilt natürlich auch bei einem Fehlschlag einer der vorangegangenen Prüfungsschritte 46 und 64.

Das Hintergrundsystem 10 erstellt nun in Schritt 70 Quittungsdaten CD über die erfolgreiche Transaktion. Diese Quittungsdaten CD werden mit einem vierten Zeitstempel TS4 versehen, verschlüsselt und wiederum mit einem MAC gesichert. Die resultierenden Daten 72 werden an das Terminal 18 übertragen, wo in Schritt 74 weitere Prüfungsschritte betreffend den MAC und den vierten Zeitstempel TS4 erfolgen. Falls diese Überprüfung fehlschlägt, kann eine entsprechende Warnung an den Benutzer und/ oder das Hintergrundsystem 10 ausgegeben werden.

Bei einer erfolgreichen Überprüfung in Schritt 74 gibt das Terminal 18 in Schritt 76 die entschlüsselten Quittungsdaten CD als Quittung 78 aus. Die Quittung 78 kann beispielsweise auf der Anzeige 22 angezeigt oder mittels eines Druckers (in Fig.1 nicht gezeigt) ausgedruckt werden. Das Verfahren ist damit beendet.

Bei dem bislang beschriebenen Ausführungsbeispiel ist für jeden Benutzer ein einziges, statisches Geheimnis vorgesehen. Es sind jedoch auch Ausführungsalternativen möglich, bei denen in der Datenbank 14 mehrere Fassungen von Geheimnisdaten SEC gespeichert sind, die unterschiedlichen Kodierungen des Geheimnisses 50 für unterschiedlich ausgestattete Terminals 18 entsprechen. Bei diesen Ausgestaltungen übermittelt das Terminal 18 in Schritt 34 zusätzliche Informationen über die zur Verfügung stehenden Wiedergabemöglichkeiten an das Hintergrundsystem 10, und das Hintergrundsystem 10 stellt in Schritt 42 geeignete Geheimnisdaten SEC zur Verfügung.

Alternativ oder zusätzlich zu unterschiedlichen Fassungen eines Geheimnisses kann die Datenbank 14 in manchen Ausgestaltungen auch Geheimnisdaten SEC für mehrere unterschiedliche Geheimnisse für jeden Benutzer aufweisen. Die Auswahl eines dieser Geheimnisse in Schritt 40 kann dann z.B. zufällig oder nach einer vorgegebenen Reihenfolge erfolgen, so daß dem Benutzer in Schritt 48 ein von Transaktion zu Transaktion wechselndes Geheimnis 50 angezeigt wird. Durch ein solches dynamisches Geheimnis werden Replay-Angriffe, die auf einem Nachspielen früherer Transaktionen beruhen, bedeutend erschwert.

Alternativ oder zusätzlich zu der gerade genannten Möglichkeit zur Erzeugung eines dynamischen Geheimnisses kann auch vorgesehen sein, daß das Hintergrundsystem 10 in Schritt 40 in Abhängigkeit von früheren Transaktionen Geheimnisdaten SEC für ein dynamisches Geheimnis erzeugt. Insbesondere kann das dynamische Geheimnis ganz oder zum Teil aus Informationen über die letzte vorgenommene Transaktion bestehen. So kann beispielsweise das Datum und/oder der Betrag des letzten Einkaufs und/oder ein durch die Kamera 26 aufgenommenes Bild des Kunden bei der letzten Transaktion als dynamisches Geheimnis dienen. Die benötigten Daten müssen in diesen Ausgestaltungen natürlich zusätzlich in der Datenbank 14 gespeichert werden.

Es versteht sich, daß die in der obigen Beschreibung von Ausführungsbeispielen enthaltenen Einzelheiten nicht als Einschränkungen des Schutzbereichs der Erfindung aufgefaßt werden sollen. Viele Abwandlungen und weitere Ausführungsalternativen sind möglich und für den Fachmann offensichtlich.

## Patentansprüche

1. Verfahren zur Autorisierung einer Transaktion durch einen Benutzer unter Verwendung eines Terminals (18), das mit einem Hintergrundsystem (10) zu kommunizieren vermag, mit den durch das Terminal (18) ausgeführten Schritten:
- Ermitteln (30) von Identifikationsinformationen (32), die den Benutzer identifizieren,
- Senden (34) von Daten (36) an das Hintergrundsystem (10), um das Terminal (18) bei dem Hintergrundsystem (10) zu authentisieren und um Benutzerbezeichnungsdaten (ID), aus denen die Identität des Benutzers ableitbar ist, an das Hintergrundsystem (10) zu übertragen,
- Empfangen von Geheimnisdaten (SEC), die dem Benutzer zugeordnet sind, von dem Hintergrundsystem (10),
- Wiedergeben (48) eines durch die Geheimnisdaten (SEC) angegebenen Geheimnisses (50) an den Benutzer,
- Ermitteln (58) eines persönlichen Merkmals (56) des Benutzers, und
- Senden (60) von Daten (62), die mit dem persönlichen Merkmal (56) des Benutzers in Beziehung stehen, an das Hintergrundsystem (10), um die Autorisierung der Transaktion durch den Benutzer anzuzeigen oder zu belegen.

2. Verfahren nach Anspruch 1, **dadurch gekennzeichnet, daß** das Terminal (18) zur Authentisierung bei dem Hintergrundsystem (10) eine mit einem MAC oder einer kryptographischen Signatur gesicherte Nachricht an das Hintergrundsystem (10) sendet.

3. Verfahren nach Anspruch 2, **dadurch gekennzeichnet, daß** die Nachricht die Benutzerbezeichnungsdaten (ID) enthält, die den vom Terminal (18) ermittelten Identifikationsinformationen (32) entsprechen oder aus diesen abgeleitet wurden.

4. Verfahren nach einem der Ansprüche 1 bis 3, **dadurch gekennzeichnet, daß** das dem Benutzer wiedergegebene Geheimnis (50) eine textuelle und/oder akustische und/oder visuelle und/oder taktile Information ist.

5. Verfahren nach einem der Ansprüche 1 bis 4, **dadurch gekennzeichnet, daß** dem Benutzer ferner Transaktionsdaten (54) angezeigt werden.

6. Verfahren nach einem der Ansprüche 1 bis 5, **dadurch gekennzeichnet, daß** das persönliche Merkmal (56) ein biometrisches Merkmal des Benutzers ist.

7. Verfahren nach einem der Ansprüche 1 bis 6, ferner **gekennzeichnet durch** den Schritt, Quittungsdaten (CD) von dem Hintergrundsystem (10) zu empfangen und dem Benutzer eine Quittung (78) anzuzeigen und/oder auszudrucken.

8. Verfahren zur Autorisierung einer Transaktion durch einen Benutzer unter Verwendung eines Hintergrundsystems (10), das mit einem Terminal (18) zu kommunizieren vermag, mit den durch das Hintergrundsystem (10) ausgeführten Schritten:
- Empfangen von Daten (36) von dem Terminal (18), die das Terminal (18) bei dem Hintergrundsystem (10) authentisieren (38) und aus denen die Identität des Benutzers ableitbar ist,
- falls die Authentisierung (38) des Terminals (18) bei dem Hintergrundsystem (10) erfolgreich war, dann Zugriff (40) auf Geheimnisdaten (SEC), die in einer Datenbank (14) gespeichert und dem Benutzer zugeordnet sind, und Senden (42) von Daten (44), aus denen die Geheimnisdaten (SEC) ermittelbar sind, an das Terminal (18), und
- Empfangen von Daten (62), die zumindest auch ein persönliches Merkmal (56) des Benutzers betreffen und die die Autorisierung der Transaktion durch den Benutzer belegen, von dem Terminal (18).

9. Verfahren nach Anspruch 8, **dadurch gekennzeichnet, daß** die Geheimnisdaten (SEC) ein von Transaktion zu Transaktion wechselndes Geheimnis (50) betreffen.

10. Verfahren nach Anspruch 9, **dadurch gekennzeichnet, daß** die Geheimnisdaten (SEC) ein Geheimnis (50) betreffen, das zumindest zum Teil von früher durchgeführten Transaktionen abhängt.

11. Verfahren nach einem der Ansprüche 8 bis 10, **dadurch gekennzeichnet, daß** die Daten (62), die zumindest auch das persönliche Merkmal (56) des Benutzers betreffen, überprüft werden (66), und daß die Transaktion nur bei einer erfolgreichen Überprüfung als durch den Benutzer autorisiert gilt.

12. Verfahren nach Anspruch 11, **dadurch gekennzeichnet, daß** bei einer erfolgreichen Überprüfung Quittungsdaten (CD) an das Terminal (18) gesendet werden.

13. Verfahren zur Autorisierung einer Transaktion durch einen Benutzer unter Verwendung eines Terminals (18), das mit einem Hintergrundsystem (10) zu kommunizieren vermag, mit den Schritten:
- Ermitteln (30) von Identifikationsinformationen (32), die den Benutzer identifizieren, durch das Terminal (18),
- Kommunikation zwischen dem Terminal (18) und dem Hintergrundsystem (10), um das Terminal (18) bei dem Hintergrundsystem (10) zu authentisieren (38) und Benutzerbezeichnungsdaten (ID), aus denen die Identität des Benutzers ableitbar ist, an das Hintergrundsystem (10) zu übertragen,
- falls die Authentisierung (38) des Terminals (18) bei dem Hintergrundsystem (10) erfolgreich war, dann Zugriff des Hintergrundsystems (10) auf Geheimnisdaten (SEC), die in einer Datenbank (14) gespeichert und dem Benutzer zugeordnet sind, und Senden (42) von Daten (44), aus denen die Geheimnisdaten (SEC) ermittelbar sind, an das Terminal (18),
- Wiedergeben (48) eines durch die Geheimnisdaten (SEC) angegebenen Geheimnisses (50) an den Benutzer durch das Terminal (18),
- Ermitteln (58) eines persönlichen Merkmals (56) des Benutzers durch das Terminal (18), und
- Durchführen der Transaktion unter Verwendung von Daten (62), die zumindest auch das persönliche Merkmal (56) des Benutzers betreffen.

14. Verfahren nach Anspruch 13, **dadurch gekennzeichnet, daß** die Kommunikationsvorgänge zwischen dem Terminal (18) und dem Hintergrundsystem (10) zumindest zum Teil durch Zeitstempel (TS1 - TS4) und/oder Sequenznummern und/oder Zufallszahlen und/oder eine Verschlüsselung mit einem Sitzungsschlüssel gegen Angriffe geschützt werden.

15. Verfahren nach Anspruch 13 oder Anspruch 14, ferner **gekennzeichnet durch** von dem Terminal (18) ausgeführte Verfahrensschritte gemäß einem der Ansprüche 1 bis 7 und/oder von dem Hintergrundsystem (10) ausgeführte Verfahrensschritte gemäß einem der Ansprüche 8 bis 12.

16. Terminal (18) und/ oder Hintergrundsystem (10), **dadurch gekennzeichnet, daß** es zur Ausführung eines Verfahrens nach einem der Ansprüche 1 bis 15 eingerichtet ist.

17. Computerprogrammprodukt, das Programmbefehle für mindestens einen Prozessor eines Terminals (18) und/ oder eines Hintergrundsystems (10) aufweist, **dadurch gekennzeichnet, daß** es mindestens einen Prozessor veranlaßt, ein Verfahren nach einem der Ansprüche 1 bis 15 auszuführen.

## Claims

1. Method for authorizing a transaction by a user, the method using a terminal (18) which is capable of communicating with a background system (10), with the steps performed by the terminal (18):
- determining (30) identification information (32) which identifies the user,
- sending (34) data (36) to the background system (10) to authenticate the terminal (18) at the background system (10) and to transmit user designation data (ID), from which the identity of the user can be derived, to the background system (10),
- receiving secret data (SEC) assigned to the user from the background system (10),
- playing back (48) to the user a secret (50) indicated by the secret data (SEC),
- determining (58) a personal feature (56) of the user, and
- sending (60) data (62) which are related to the personal feature (56) of the user to the background system (10) to indicate or document the authorization of the transaction by the user.

2. Method according to claim 1, **characterised in that** the terminal (18), for authentication at the background system (10), sends to the background system (10) a message secured with at least a MAC or a cryptographic signature.

3. Method according to claim 2, **characterised in that** the message contains the user designation data (ID) that correspond to the identification information (32) determined by the terminal (18) or that have been derived therefrom.

4. Method according to any one of the claims 1 to 3, **characterised in that** the secret (50) played back to the user is text information and/ or acoustic information and/or visual information and/or tactile information.

5. Method according to any one of the claims 1 to 4, **characterised in that** transaction data (54) are also displayed to the user.

6. Method according to any one of the claims 1 to 5, **characterised in that** the personal feature (56) is a biometric feature of the user.

7. Method according to any one of the claims 1 to 6, further **characterised by** the step of receiving acknowledgement data (CD) from the background system (10) and of displaying and/ or printing out an acknowledgement (78) to the user.

8. Method for authorizing a transaction by a user, the method using a background system (10), which is capable of communicating with a terminal (18), with the steps performed by the background system (10):
- receiving data (36) from the terminal (18), the data authenticating (38) the terminal (18) at the background system (10) and from which the identity of the user can be derived,
- if the authentication (38) of the terminal (18) at the background system (10) has been successful, then accessing (40) secret data (SEC) stored in a database (14) and assigned to the user, and sending (42) data (44) from which the secret data (SEC) can be determined to the terminal (18), and
- receiving data (62) from the terminal (18), which relate at least also to a personal feature (56) of the user and which document the authorization of the transaction by the user.

9. Method according to claim 8, **characterised in that** the secret data (SEC) relate to a secret (50) which changes from transaction to transaction.

10. Method according to claim 9, **characterised in that** the secret data (SEC) relate to a secret (50) which depends at least in part on transactions performed previously.

11. Method according to any one of the claims 8 to 10, **characterised in that** the data (62) which relate at least also to the personal feature (56) of the user are checked (66), and **in that** the transaction is considered authorized by the user only if the check is successful.

12. Method according to claim 11, **characterised in that** acknowledgement data (CD) are sent to the terminal (18) if the check is successful.

13. Method for authorizing a transaction by a user, the method using a terminal (18) which is capable of communicating with a background system (10), with the steps:
- determining (30), by the terminal (18), identification information (32) which identifies the user,
- communication between the terminal (18) and the background system (10) to authenticate (38) the terminal (18) at the background system (10) and to transmit user designation data (ID), from which the identity of the user can be derived, to the background system (10),
- if the authentication (38) of the terminal (18) at the background system (10) has been successful, then access by the background system (10) to secret data (SEC) stored in a database (14) and assigned to the user, and sending (42) data (44) from which the secret data (SEC) can be determined to the terminal (18),
- playing back (48), by the terminal (18), to the user a secret (50) indicated by the secret data (SEC),
- determining (58), by the terminal (18), a personal feature (56) of the user, and
- carrying out the transaction using data (62) relating to at least also the personal feature (56) of the user.

14. Method according to claim 13, **characterised in that** the communication processes between the terminal (18) and the background system (10) are protected against attacks at least in part by time stamps (TS1 - TS4) and/or sequence numbers and/or random numbers and/or an encryption with a session key.

15. Method according to claim 13 or claim 14, further **characterised by** method steps according to any one of the claims 1 to 7 performed by the terminal (18) and/or by method steps according to any one of the claims 8 to 12 performed by the background system (10).

16. Terminal (18) and/ or background system (10), **characterised in that** it is configured for performing a method according to any one of the claims 1 to 15.

17. Computer program product comprising program instructions for at least one processor of a terminal (18) and/or a background system (10), **characterised in that** it causes at least one processor to perform a method according to any one of the claims 1 to 15.

## Revendications

1. Procédé d'autorisation d'une transaction par un utilisateur en employant un terminal (18) qui est capable de communiquer avec un système d'arrière-plan (10), ayant les étapes exécutées par le terminal (18) consistant à :
- déterminer (30) des informations d'identification (32) qui identifient l'utilisateur,
- envoyer (34) des données (36) au système d'arrière-plan (10) pour authentifier le terminal (18) auprès du système d'arrière-plan (10) et pour transmettre au système d'arrière-plan (10) des données d'identification d'utilisateur (ID) à partir desquelles peut être déduite l'identité de l'utilisateur,
- recevoir du système d'arrière-plan (10) des données secrètes (SEC) qui sont attribuées à l'utilisateur,
- restituer (48) à l'utilisateur un secret (50) indiqué par les données secrètes (SEC),
- déterminer (58) une caractéristique personnelle (56) de l'utilisateur, et
- envoyer (60) au système d'arrière-plan (10) des données (62) qui sont en relation avec la caractéristique personnelle (56) de l'utilisateur afin d'afficher ou de justifier l'autorisation de la transaction par l'utilisateur.

2. Procédé selon la revendication 1, **caractérisé en ce que** le terminal (18) pour l'authentification auprès du système d'arrière-plan (10) envoie au système d'arrière-plan (10) un message sécurisé par une signature MAC ou une signature cryptographique.

3. Procédé selon la revendication 2, **caractérisé en ce que** le message contient les données d'identification d'utilisateur (ID) qui correspondent aux informations d'identification (32) déterminées par le terminal (18) ou qui ont été déduites de ces informations.

4. Procédé selon l'une des revendications 1 à 3, **caractérisé en ce que** le secret (50) restitué à l'utilisateur est une information textuelle et/ou acoustique et/ou visuelle et/ ou tactile.

5. Procédé selon l'une des revendications 1 à 4, **caractérisé en ce que** des données de transaction (54) sont en outre affichées à l'utilisateur.

6. Procédé selon l'une des revendications 1 à 5, **caractérisé en ce que** la caractéristique personnelle (56) est une caractéristique biométrique de l'utilisateur.

7. Procédé selon l'une des revendications 1 à 6, **caractérisé en outre par** l'étape consistant à recevoir des données d'accusé-réception (CD) du système d'arrière-plan (10) et à afficher et/ ou imprimer un accusé-réception (78).

8. Procédé d'autorisation d'une transaction par un utilisateur en employant un système d'arrière-plan (10), qui est capable de communiquer avec un terminal (18), ayant les étapes exécutées par le système d'arrière-plan (10) consistant à :
- recevoir des données (36) du terminal (18) qui authentifient (38) le terminal (18) auprès du système d'arrière-plan (10) et à partir desquelles peut être déduite l'identité de l'utilisateur,
- si l'authentification (38) du terminal (18) auprès du système d'arrière-plan (10) a réussi, alors accéder (40) aux données secrètes (SEC), qui sont stockées dans une banque de données (14) et attribuées à l'utilisateur, et envoyer (42) au terminal (18) des données (44) à partir desquelles peuvent être déterminées les données secrètes (SEC), et
- recevoir du terminal (18) des données (62) qui concernent au moins également une caractéristique personnelle (56) de l'utilisateur et qui justifient l'autorisation de la transaction par l'utilisateur.

9. Procédé selon la revendication 8, **caractérisé en ce que** les données secrètes (SEC) concernent un secret (50) changeant d'une transaction à l'autre.

10. Procédé selon la revendication 9, **caractérisé en ce que** les données secrètes (SEC) concernent un secret (50) qui dépend au moins en partie de transactions précédemment exécutées.

11. Procédé selon l'une des revendications 8 à 10, **caractérisé en ce que** les données (62) qui concernent au moins également la caractéristique personnelle (56) de l'utilisateur, sont vérifiées (66) et que la transaction est considérée comme autorisée par l'utilisateur uniquement en cas de vérification réussie.

12. Procédé selon la revendication 11, **caractérisé en ce que**, en cas de vérification réussie, les données d'acquittement (CD) sont envoyées au terminal (18).

13. Procédé d'autorisation d'une transaction par un utilisateur en employant un terminal (18), qui est capable de communiquer avec un système d'arrière-plan (10), ayant les étapes suivantes :
- détermination (30) par le terminal (18) des informations d'identification (32) qui identifient l'utilisateur,
- communication entre le terminal (18) et le système d'arrière-plan (10) afin d'authentifier (38) le terminal (18) auprès du système d'arrière-plan (10) et de transmettre au système d'arrière-plan (10) des données d'identification d'utilisateur (ID) à partir desquelles peut être déduite l'identité de l'utilisateur,
- si l'authentification (38) du terminal (18) auprès du système d'arrière-plan (10) a réussi, alors accès par le système d'arrière-plan (10) aux données secrètes (SEC) qui sont stockées dans une banque de données (14) et sont attribuées à l'utilisateur, et envoi (42) au terminal (18) des données (44) à partir desquelles peuvent être déterminées les données secrètes (SEC),
- restitution (48) à l'utilisateur par le terminal (18) d'un secret (50) indiqué par les données secrètes (SEC),
- détermination (58) par le terminal (18) d'une caractéristique personnelle (56) de l'utilisateur
- exécution de la transaction en employant des données (62) qui concernent au moins également la caractéristique personnelle (56) de l'utilisateur.

14. Procédé selon la revendication 13, **caractérisé en ce que** les opérations de communication entre le terminal (18) et le système d'arrière-plan (10) sont au moins en partie protégées contre des attaques par des horodatages (TS1 - TS4) et/ou des numéros séquentiels et/ ou des nombres aléatoires et/ ou un chiffrement avec une clé de session.

15. Procédé selon la revendication 13 ou la revendication 14, **caractérisé en outre par** les étapes de procédé exécutées par le terminal (18) selon l'une des revendications 1 à 7 et/ou les étapes de procédés exécutées par le système d'arrière-plan (10) selon l'une des revendications 8 à 12.

16. Terminal (18) et/ou système d'arrière-plan (10), **caractérisé en ce qu'**il est conçu pour l'exécution d'un procédé selon l'une quelconque des revendications précédentes 1 à 15.

17. Produit-programme d'ordinateur qui comporte des instructions de programme pour au moins un processeur d'un terminal (18) et/ou d'un système d'arrière-plan (10), **caractérisé en ce qu'**il fait en sorte qu'au moins un processeur exécute un procédé selon l'une des revendications 1 à 15.
